# EUROPEAN PATENT APPLICATION

(11) **EP 1 061 099 A1**
(43) Date of publication of application: **20.12.2000**
(21) Application number: 99906529.5
(22) Date of filing: 26.02.1999
(51) Int. Cl.: C08L 23/10, C08J 5/18, B32B 27/32

(54) **POLYPROPYLENE RESIN COMPOSITIONS AND PACKAGING STRETCHED FILM MADE THEREOF**

(30) Priority: 02.03.1998 JP 6622498
(71) Applicant: Kureha Chemical Industry Co., Ltd., Tokyo 103-0012 (JP)
(72) Inventor: NAKAJIMA, Junji, Tsuchiura-shi Ibaraki 300-0013 (JP); FUNABASHI, Shinichiro, Niihari-gun Ibaraki 315-0054 (JP)
(74) Representative: Benson, John Everett
(86) International application number: JP9900953
(87) International publication number: WO9945064

(57) **Abstract**

A polypropylene resin composition which contains 60 to 99 parts by weight of a polypropylene resin (A) having a crystalline melting point of 130°C or higher, 1 to 40 parts by weight of a hydrogenated copolymer (B) of an aromatic vinyl compound and a conjugated diolefin, 0.1 to 20 parts by weight of polybutene (C) having a kinematic viscosity as measured at 37.8°C in accordance with JIS K2283 of 10 to 2,000,000 cSt, 0.1 to 20 parts by weight of a tackifier (D), and 0 to 5 parts by weight of a tackifier aid (E), the amounts of components (C), (D), and (E) being on the basis of 100 parts by weight of the sum of components (A) and (B); a polypropylene resin composition which contains 95 to 100 parts by weight of component (A), 0 to 5 parts, excluding 5 parts, by weight of component (B), 5 to 20 parts by weight of component (C), 0.1 to 20 parts by weight of component (D), and 0.01 to 1 part by weight of component (E), the amounts of components (C), (D), and (E) being on the basis of 100 parts by weight of the sum of components (A) and (B); and a stretched film for packaging which is made of any of these polypropylene resin compositions.

## Description

### Technical Field

The present invention relates to novel polypropylene resin compositions and packaging film made therefrom. The packaging film of the present invention is endowed with excellent properties in terms of adhesion, heat resistance, ease-of-cutting, and transparency, and thus a major use would be in the packaging of food.

### Background Art

In restaurants and homes, foods have conventionally been wrapped with film either to preserve the foods or to allow heating in a microwave oven, with the foods being wrapped with film so as to prevent them from drying out and to maintain the freshness thereof. Currently, film predominantly comprising polyvinylidene chloride resin (PVDC), polyvinyl chloride (PVC), or polyethylene resin (PE) is widely employed for such wrap film or stretched film. Particularly, wrap films made of PVDC are endowed with excellent characteristics such as high heat resistance and oxygen gas barrier property, and in addition, the films provide an appropriate level of adhesion to tableware and cohesion to similar films, which do not adhere any more than necessary. Thus, such a film can be readily unrolled from a cardboard core roll while the film is set in a film box. Furthermore, a serrated cutter attached to the edge of a film box can smoothly cut the PVDC films (hereinafter the property is simply referred to as "ease-of-cutting"). These excellent properties have resulted in PVDC films being widely employed as wrap films.

Recently, chlorine-free wrap films have been proposed instead of chlorine-containing wrap films made of PVDC or PVC. For example, Japanese Patent Publication (*kokoku*) No. 61-8100 discloses an adhesive film for packaging produced from a composition containing a thermoplastic elastomer such as a polyolefin resin or a styrene-butadiene block polymer and a viscous liquid aliphatic hydrocarbon. Japanese Patent Publication (*kokoku*) No. 63-56259 discloses a polypropylene resin composition comprising polypropylene resin, polyolefin rubber, polybutene, a tackifier aid, and optionally a small amount of peroxide, as well as an adhesive film made therefrom. Japanese Patent Application Laid-Open (*kokai*) No. 4-249131 discloses a packaging film which is obtained by stretching a 3-layer film formed of an inner layer comprising an aliphatic polyamide resin and two outer layers comprising a polypropylene resin composition containing a polypropylene resin, polybutene or polyisobutylene, and a polyglycerin fatty acid ester. In Japanese Patent Application Laid-Open (*kokai*) No. 6-322194, the present inventors have already disclosed a polypropylene resin composition comprising a polypropylene resin (A) (99-60 parts by weight), a hydrogenated product of an aromatic vinyl compound-conjugated diolefin copolymer (B) (1-40 parts by weight), polybutene (C) (0.1-20 parts by weight), and a tackifier aid (D) (0-5 parts by weight), the amounts of components (C) and (D) being per 100 parts by weight of the sum of components (A) and (B), and a packaging film comprising two outer layers formed of the above polypropylene resin composition and an inner layer formed of an aromatic polyamide resin or a saponified product of an ethylene-vinyl acetate copolymer, the packaging film being endowed with improved heat resistance, transparency, and adhesion which are required for wrap film.

Japanese Patent Application Laid-Open (*kokai*) No. 4-328144 discloses a biaxially stretched polypropylene wrap film which contains a polypropylene copolymer (88-99 wt.%) and a surfactant (0.3-5 parts by weight) and has an inter-film static friction coefficient of 1.5 or more and a birefringence of 0.008 or more.

The above-disclosed polyolefin resin films exhibit excellent heat resistance which allows use thereof in a microwave oven. However, these polyolefin resin films leave a problem to be improved with respect to a balanced combination of the properties required for wrap film such as adhesion, transparency, and ease-of-cutting. Among these properties, the term "adhesion" will be further described in detail, since the term is considered from a variety of aspects. Wrap film is required to be adhesive to the extent that the film does not peel off tableware during storage in a refrigerator. In addition, while the adhesion of the film must be strong enough that overlapped films enclosing a small piece of food adhere to each other with sufficient tenacity, but moderately enough to permit the film to be unrolled from around a cardboard core roll, and from the surface of film wound around such a roll (hereinafter this property is referred to as "easy-drawing property"). When the adhesion is excessively strong, an excess adhesive component in the liquid form may bleed out onto the surface of the film, thereby causing stickiness of the film, or the entire roll of film may be pulled out of the film box instead of only the outermost film being drawn (i.e., impeded easy-drawing). In contrast, when the adhesion is much weaker, the film peels off tableware easily. As described above, there has been no chlorine-free wrap film which is well-balanced in terms of adhesion as mentioned above and possessing excellent ease-of-cutting and transparency.

Thus, an object of a first invention of the present invention is to provide a chlorine-free resin composition providing a packaging film endowed with a good balance amongst such properties as adhesion, transparency, and ease-of-cutting which are required for wrap film. Another object of the first invention is to provide a stretched packaging film made of the resin composition. An object of a second invention of the present invention is to provide a resin composition that provides a packaging film which has well-balanced film-to-film adhesion (favorable easy-drawing), *inter alia*, balance between adhering and peeling while drawing the rolled film from a film box. Another object of the second invention is to provide a stretched packaging film made of the resin composition.

### Disclosure of the Invention

On the basis of the aforementioned Japanese Patent Application Laid-Open (*kokai*) No. 6-322194, the present inventors have conducted further studies so as to provide novel chlorine-free film endowed with a good balance between such properties as heat resistance, adhesion, transparency, and ease-of-cutting which are required for wrap film. The inventors have found that a film made of a specific resin composition prepared by incorporating a hydrogenated product of an aromatic vinyl compound-conjugated diolefin copolymer, polybutene, a tackifier, and an optional tackifier aid into a polypropylene resin composition having excellent heat resistance and water-vapor-barrier properties exhibits improved heat resistance, adhesion, and transparency, and allows the film to be stretched facilitating ease of cutting. The first invention has been accomplished on the basis of these findings. The inventors have also found that a resin composition comprising a polypropylene resin, an optionally added hydrogenated product of an aromatic vinyl compound-conjugated diolefin copolymer, polybutene, a tackifier, and a tackifier aid, each component being incorporated in the composition in an amount falling within a specific range, particularly imparts an excellent easy-drawing property to a film made of the resin composition. The second invention has been accomplished on the basis of this finding.

Accordingly, in the first invention, there is provided a polypropylene resin composition which comprises 60-99 parts by weight of a polypropylene resin (A) having a crystalline melting point of 130°C or higher; 1-40 parts by weight of a hydrogenated copolymer (B) of an aromatic vinyl compound and a conjugated diolefin (which hereinafter may be referred to as simply "hydrogenated copolymer"); 0.1-20 parts by weight of polybutene (C) having a kinematic viscosity as measured at 37.8°C in accordance with JIS K2283 of 10-2,000,000 cSt; 0.1-20 parts by weight of a tackifier (D); and 0-5 parts by weight of a tackifier aid (E), the amounts of components (C), (D), and (E) being on the basis of 100 parts by weight of the sum of components (A) and (B).

In the first invention, there are also provided:
a stretched film for packaging which is made of the aforementioned polypropylene resin composition;
a laminated stretched film for packaging in which at least one outer surface is formed of the aforementioned stretched film for packaging;
a laminated stretched film for packaging in which an inner layer is formed of a layer made of a polypropylene resin or resin composition comprising 70-100 parts by weight of a polypropylene resin (A) and 0-30 parts by weight of the aforementioned hydrogenated copolymer (B) and at least one outer surface is formed of the aforementioned stretched film for packaging; and
the aforementioned laminated stretched films for packaging having an Elmendorf tear resistance in the TD direction of 10 gf or less.

In the second invention, there is provided a polypropylene resin composition which comprises 95-100 parts by weight of a polypropylene resin (A) having a crystalline melting point of 130°C or higher; 0-5 parts by weight of a hydrogenated copolymer (B) of an aromatic vinyl compound and a conjugated diolefin; 5-20 parts by weight of polybutene (C) having a kinematic viscosity of 10-2,000,000 cSt as measured at 37.8°C in accordance with JIS K2283; 0.1-20 parts by weight of a tackifier (D); and 0.01-1 part by weight of a tackifier aid (E), the amounts of components (C), (D), and (E) being on the basis of 100 parts by weight of the sum of components (A) and (B).

In the second invention, there are also provided:
the aforementioned polypropylene composition, wherein the polybutene (C) comprises 0.1-10 parts by weight of a low-molecular-weight polybutene having a kinematic viscosity of 10-20,000 cSt as measured at 37.8°C and the balance being a high-molecular-weight polybutene having a kinematic viscosity of 20,000-2,000,000 cSt, the total amount of the two polybutenes being 5-20 parts by weight;
the aforementioned polypropylene composition, wherein the tackifier (D) is at least one species selected from petroleum resins; and
the aforementioned polypropylene composition, wherein the tackifier aid (E) is at least one species selected from surfactants.

In addition, the second invention provides
a stretched film for packaging made of any one of the polypropylene resin compositions as recited in the second invention;
the stretched film for packaging which is biaxially stretched; and
a laminated stretched film for packaging in which at least one outer surface is formed of the aforementioned stretched film for packaging.

### Best Modes for Carrying Out the Invention

Hereinafter, the first invention will be described in detail.

The polypropylene resin (A) which is employed as a base material of the polypropylene resin composition of the first invention may be a propylene homopolymer or a copolymer predominantly containing propylene with an α-olefin other than propylene such as ethylene or butylene. Of these, ethylene-propylene copolymers are preferred. The copolymers may be a random copolymer or a block copolymer, with a random copolymer being preferably employed. Physical properties of the polypropylene resin of the present invention are not particularly limited. However, the resin has a melt index (MFR) suitable for forming film at 0.5-20 g/10 min (in accordance with JIS K6758, 230°C, 2.16 kg load), particularly preferably 0.5-10 g/10 min. The resin preferably has a density of 0.89-0.91 g/cm³. Although required heat resistance depends on the type of food to be packaged or the mode of use of the thus-obtained stretched film for packaging (hereinafter may be referred to as "wrap film"), the crystalline melting point is typically 130°C or higher, preferably 140°C or higher, more preferably 155°C or higher. The term "crystalline melting point" as used herein refers to the temperature at the heat absorption peak in a melting curve for crystalline material as measured using a differential scanning calorimeter (DSC-7, product of Perkin-Elmer) at a temperature elevating rate of 20°C/min.

The hydrogenated copolymer (B) of an aromatic vinyl compound and a conjugated diolefin employed in the first invention is a type of thermoplastic elastomer. In the wrap film provided by the present invention, the hydrogenated copolymer (B) serves as an excellent accelerator for bleeding out polybutene (C) to a film surface or as an excellent film-softening agent, thereby possibly imparting excellent adhesion to wrap film combined with polybutene (C) and the tackifier (D). In addition, the aforementioned hydrogenated copolymer (B) and the tackifier (D) have high compatibility with the polypropylene resin (A), and are considered to play an important role in elevating the transparency of the obtained wrap film.

The aforementioned hydrogenated copolymer (B) is a hydrogenated product of a copolymer containing at least an aromatic vinyl compound and a conjugated diolefin serving as comonomer units. Among such hydrogenated copolymers, a copolymer containing exclusively an aromatic vinyl compound and a conjugated diolefin is preferably used. The copolymer may be a block polymer or a random polymer, with a block polymer being preferred.

Examples of aromatic vinyl compounds include styrene, α-methylstyrene, vinyltoluene, p-tert-butylstyrene, vinylxylene, ethylvinylxylene, and vinylnaphthalene. Examples of conjugated diolefins include butadiene, isoprene, 1,3-pentadiene, and 2,3-dimethylbutadiene.

Among these hydrogenated copolymers, a hydrogenated product of a styrene-butadiene-styrene (SBS) block copolymer is particularly preferred. A hydrogenated product of a styrene-isoprene-styrene (SIS) block copolymer is relatively preferred.

In the SBS block copolymer, the styrene component may be partially substituted by an aromatic vinyl compound such as α-methylstyrene, vinyltoluene, p-tert-butylstyrene, vinylxylene, ethylvinylxylene, or vinylnaphthalene. Similarly, the butadiene component may be partially substituted by a diene such as isoprene, 1,3-pentadiene, or 2,3-dimethylbutadiene. Although the block copolymer may have a variety of structures, an end block is preferably an aromatic vinyl compound moiety. The block copolymer preferably has a number average molecular weight of approximately 10,000 to approximately 100,000, particularly preferably 20,000 to approximately 300,000.

Aliphatic double bonds in the hydrogenated copolymer (B) are preferably hydrogenated in an amount of 90% or more, particularly preferably 99% or more. As disclosed in Japanese Patent Application Laid-Open (*kokai*) No. 52-150457, such a hydrogenated copolymer has a structure similar to a copolymer block of ethylene and 1-butene (1-butylene) (EB) or a similar structure, since a certain ratio of butadiene moieties in a butadiene polymer block takes the 1,2-configuration. Thus, the hydrogenated copolymer is generally called "a styrene-ethylene-butylene-styrene block copolymer (SEBS block copolymer) and is commercially available under various trade names, such as Elastomer AR (Aron Kasei Co., Ltd.) and Kraton G (Shell Kagaku K.K.).

Into the resin composition of the first invention, the propylene resin (A) is incorporated in an amount of 60-99 parts by weight, preferably 70-95 parts by weight, more preferably 80-90 parts by weight. Similarly, the hydrogenated copolymer (B) is incorporated in an amount of 1-40 parts by weight, preferably 5-30 parts by weight, more preferably 10-20 parts by weight. When the amount of the hydrogenated copolymer is in excess of 40 parts by weight, the resin composition has poor film formability and the produced film has poor transparency, whereas when the amount is less than 1 part by weight, adhesion of the produced film decreases. Herein, the total amount of components (A) and (B) is 100 parts by weight.

The polybutene (C) used in the first invention serves as a tackifier for a packaging film of the present invention. The polybutene (C) is a viscous liquid at ambient temperature having a kinematic viscosity as measured at 37.8°C in accordance with JIS K2283 of 10-2,000,000 cSt, preferably 100-500,000 cSt. In the present invention, a single polybutene may be used if it has a kinematic viscosity falling within the above range. Alternatively, two or more polybutenes having different kinematic viscosities may also be used so as to modify the adhesive qualities of the packaging film. The polybutene (C) is incorporated into 100 parts by weight of components (A) and (B) in an amount of 0.1-20 parts by weight, preferably 2-18 parts by weight, more preferably 5-15 parts by weight.

The tackifier (D) used in the first invention is a solid substance at ambient temperature, and serves as a component which imparts adhesion to the wrap film of the present invention. Typically employed is a material which is incorporated into materials such as natural rubber, synthetic rubber, natural-synthetic blended rubber, rubber-based adhesives, and latex, and is known to enhance adhesion of a surface of products made of the tackifier-incorporated material. The above resins impart further adhesion to polybutene (C), and are considered to increase the effective contact area between the wrap film and the objects to be wrapped, thereby enhancing apparent adhesion. Specifically, these resins enhance the surface smoothness of the wrap film. In the present invention, it is preferable to employ alicyclic saturated hydrocarbon resin as the tackifier. The alicyclic saturated hydrocarbon resin is a nucleus-hydrogenated aromatic petroleum resin or a hydrogenated product of heat-polymerized dicyclopentadiene. Petroleum resin refers to a resin produced by cationically polymerizing a fraction containing unsaturated hydrocarbons by-produced through pyrolysis of petroleum products such as naphtha. Petroleum resins are broadly categorized into aliphatic petroleum resins, aromatic petroleum resins, copolymer-type petroleum resins, and alicyclic hydrogenated petroleum resins. Of these, Arkon (product of Arakawa Chemical Industries, Ltd.) is an alicyclic hydrogenated petroleum resin (also called alicyclic saturated hydrocarbon resin), which is produced by polymerizing an aromatic C₉ fraction and nucleus hydrogenation. Arkon is represented by the following chemical, formula (1): 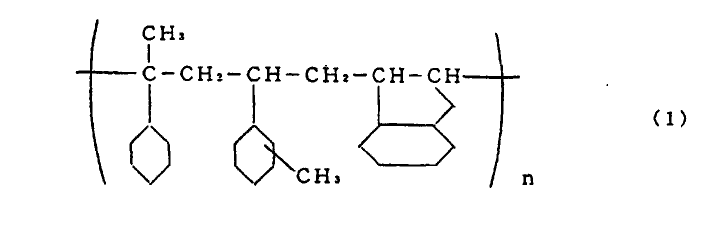 (wherein n is a positive integer), and particularly preferred in view of transparency.

Examples of other tackifiers employed in the first invention include rosin-modified resins, terpene resins, terpene-phenolic resins, phenolic resins, coumarone-indene resins, and petroleum resins other than the above described alicyclic saturated hydrocarbon resins. These tackifiers may be used singly or in a combination of two or more species so as to modify the adhesive qualities of the produced wrap films for packaging.

The tackifier (D) is incorporated into the composition of the first invention in an amount of 0.1-20 parts by weight based on 100 parts by weight of the sum of the polypropylene resin (A) and the hydrogenated copolymer (B), preferably 1-18 parts by weight, more preferably 3-15 parts by weight. When the amount is less than 0.1 parts by weight, the polypropylene resin film produced lacks sufficient surface smoothness and impedes favorable adhesion, whereas when the amount is in excess of 20 parts by weight, the film becomes hard.

The resin composition of the first invention essentially comprises the aforementioned polypropylene resin (A), the hydrogenated copolymer (B), polybutene (C), and the tackifier (D). Preferably, the resin composition further contains a tackifier aid (E) as an optional component. The tackifier aid (E) promotes the tackifying action of polybutene (C) on packaging film and serves as a surface-smoothing agent. Thus, incorporation of the tackifier aid (E) can reduce the amount of polybutene (C) in the resin composition.

The tackifier aid (E) of the first invention is typically a liquid at ambient temperature. The tackifier aid may be a surfactant, and examples of surfactants include glycerin fatty acid esters such as polyglycerin polyricinoleate, glycerin oleate, and diglycerin laurate; sorbitan monofatty acid esters such as sorbitan monolaurate; polyoxyethylene alkyl ethers; polyoxyethylene alkylphenyl ethers; polyoxyethylene alkyl esters; polyoxyethylene sorbitan alkyl esters; polyoxyethylene alkylamines; pentaerythritol fatty acid esters; propylene glycol fatty acid esters; and trimethylolpropane fatty acid esters. The tackifier aid may also be a liquid paraffin (LP). Of these, glycerin fatty acid esters are preferably used. The tackifier aid (E) is incorporated into the composition of the present invention in an amount of 0-5 parts by weight based on 100 parts by weight of the sum of the polypropylene resin (A) and the hydrogenated copolymer (B), preferably 0.05-3 parts by weight, more preferably 0.05-1 part by weight, particularly preferably 0.1-1 part by weight, further preferably 0.1-0.5 parts by weight, and most preferably 0.1-0.2 parts by weight. When the amount is in excess of 5 parts by weight, the film produced may be sticky. The resin composition of the first invention may contain other components up to a limited amount so long as the effects of the present invention are not impaired.

The resin composition of the first invention is produced by sufficiently mixing the aforementioned components (A) to (D), with the addition of the optional component (E). Customary methods in the field may be employed. For example, the components are blended under dry conditions, kneaded using a Banbury mixer or an extruder, and pelletized using a pelletizer. Alternatively, blending may be carried out portionwise. For example, component (C) and a portion of component (A); component (D) and a portion of component (A); and optional component (E) are mixed in advance. The resultant mixture is pelletized using an extruder, and then component (B) and the remaining portion of component (A) are blended with the thus-obtained master pellets. Using a different method, the resin composition of the present invention is produced in the form of pellets, and the pellets are formed into wrap film using a film-former, or the produced resin composition may be directly transferred to a wrap-film-former.

When the stretched film for packaging of the first invention is employed as a wrap film, the stretched film is preferably a biaxially stretched film. Biaxial stretching enhances the easy-cutting properties of the produced wrap film. No particular limitation is imposed on the method used for stretching. A tenter is used when molding is carried out through T dies. In inflation molding, tubular film is biaxially stretched by applying heat and inflation pressure. In this case, typically, a tubular film is extruded and quenched, heated again, and biaxially stretched using inflation pressure. The draw ratio in biaxial stretching is 3 or more in both directions, preferably 4-6.

Typical film formers, such as a T-die molding machine or an inflation molding machine, are employed to mold a single layer stretched film for packaging (wrap film), with an inflation molding machine being preferred. Cooling during film formation may be carried out through air-cooling or water-cooling. Molding conditions are not strictly limited, and are determined taking into consideration the composition to be molded; i.e., a composition containing polybutene liquid polymer and a hydrogenated copolymer (B) thermoplastic elastomer. The conditions depend on the compositional proportions of the composition. Specifically, the temperature of the resin during molding is typically 125-270°C. A single layer stretched film for packaging is molded such that the thickness thereof is preferably 5-40 µm, more preferably 5-20 µm in consideration of the mechanical strength of the film, ease of wrapping, costs, etc.

A stretched film for packaging of the first invention may be composed of a single layer film comprising the aforementioned polypropylene resin composition. Alternatively, in order to enhance the gas-barrier property of the wrap film, the stretched film may also be provided as a laminated stretched film for packaging in which a layer made of the aforementioned polypropylene resin composition is laminated on one or two surfaces of a chlorine-free resin layer which has a gas-barrier property. In this case, an adhesive layer is imposed between the gas-barrier layer and the layer made of the aforementioned polyethylene resin composition in accordance with needs. The adhesive layer typically comprises a known adhesive resin such as polyolefin resin modified with unsaturated carboxylic acid, e.g., maleic anhydride or an ionomer. Except for the adhesive layer, the laminated film is typically composed of one or two surface layers and a gas-barrier layer. However, the above layers may be further duplicated and an additional resin layer may further be added so long as the effects of the present invention are not impaired. The gas-barrier layer is preferably formed of a resin impervious to oxygen, such as a chlorine-free aromatic polyamide resin or a saponified ethylene-vinyl acetate copolymer, or a resin impervious to water vapor, such as polyproplyene resin. In the first invention, the polypropylene resin layer having a water-vapor-barrier property is preferably formed of a polypropylene resin composition containing a hydrogenated copolymer (B), particularly a SEBS block copolymer in view of the softness and transparency of wrap film. Such a resin composition comprises polypropylene resin (A) (70-100 parts by weight, more preferably 75-100 parts by weight), hydrogenated copolymer (B) (0-30 parts by weight, more preferably 0-25 parts by weight). The oxygen-gas-barrier layer and the water-vapor-barrier layer may be laminated.

The laminated stretched film for packaging (hereinafter referred to simply as a laminate film) can be produced through a known method such as co-extrusion using T-dies or an inflation method. The overall thickness of laminate film is preferably 5-40 µm, more preferably 5-20 µm, the thickness being similar to that of the aforementioned single layer film. In a laminate film having a layer structure comprising a polypropylene resin composition layer/a polypropylene resin layer/a polypropylene resin composition layer, the outer surface layers formed of a polypropylene resin composition preferably have a thickness of 1 or more µm to 15 or less µm, more preferably 1.5 or more µm to 10 or less µm, while the core polypropylene resin layer preferably has a thickness of 1 or more µm to 15 or less µm, more preferably 1.5 or more µm to 10 or less µm. The adhesion layer, which may be omitted, typically has a thickness of 0.1 or more µm to 0.5 or less µm in accordance with the type of adhesives.

Hereinafter, the second invention will be described in detail.

In the polypropylene resin composition of the second invention, there can also be employed a polypropylene resin (A) and a hydrogenated copolymer (B) comprising an aromatic vinyl compound and a conjugated olefin having physical properties similar to those of components (A) and (B) which are employed as a base material of the propylene resin composition of the first invention. The amount of the hydrogenated copolymer (B) which is incorporated into the composition will be described in detail hereafter. The polybutene (C) having a kinematic viscosity as described in the first invention can be used by itself in its unmodified form. The polybutene (C) is incorporated into the composition of the second invention in an amount of 5-20 parts by weight based on 100 parts by weight of the sum of the polypropylene resin (A) and the hydrogenated copolymer (B), preferably 8-18 parts by weight, more preferably 10-15 parts by weight. In order to maintain the softness of packaging film and an appropriate level of bleeding out of polybutene, two or more polybutenes having different kinematic viscosities are preferably used in combination. When polybutene mixture is used, the mixture contains a low-molecular-weight polybutene having a kinematic viscosity as measured at 37.8°C of 10-20,000 cSt, which polybutene is preferably contained in an amount of 0.1-10 parts by weight based on 100 parts by weight of the polypropylene resin (A), more preferably 1-8 parts by weight. The advantage of polybutene mixture is considered to be as follows. The lower the molecular weight of polybutene, the easier the polybutene bleeds out. Polybutene having a higher molecular weight, which has considerably high compatibility to the low-molecular-weight polybutene, bleeds out together with the low-molecular-weight polybutene. Thus, polybutenes sufficiently bleed out, thereby imparting favorable adhesion to produced film. The high-molecular-weight polybutene which is incorporated into the polybutene mixture has a kinematic viscosity as measured at 37.8°C of 20,000-2,000,000 cSt. The compositional proportion of high-molecular-weight polybutene and low-molecular-weight polybutene can be selected such that the kinematic viscosity of the polybutene mixture (C) as measured at 37.8°C in accordance with JIS K2283 falls within 10-2,000,000 cSt.

The tackifier (D) used in the second invention is the same as the tackifier (D) used in the first invention. Among the tackifiers, it is preferable that at least one species selected from petroleum resins is used. Petroleum resin refers to a resin produced by cationically polymerizing a fraction containing unsaturated hydrocarbons by-produced through the pyrolysis of petroleum products such as naphtha. Petroleum resins are broadly categorized into aliphatic petroleum resins, aromatic petroleum resins, copolymer-type petroleum resins, and alicyclic hydrogenated petroleum resins. Any petroleum resin may be used so long as it is selected from these petroleum resins, with alicyclic hydrogenated petroleum resins being preferred.

The tackifier (D) is incorporated into the composition of the second invention in an amount of 0.1-20 parts by weight based on 100 parts by weight of the sum of the polypropylene resin (A) and the hydrogenated copolymer (B), preferably 1-18 parts by weight, more preferably 3-15 parts by weight. When the amount is less than 0.1 parts by weight, produced polypropylene resin film has insufficient surface smoothness and imparts unfavorable adhesion, whereas when the amount is in excess of 20 parts by weight, the film becomes hard.

The tackifier aid (E) used in the second invention is the same the tackifier aid (E) as used in the first invention. Among the tackifier aids, a tackifier aid selected from surfactants is preferably used. Nonionic surfactants are particularly preferred. Examples include glycerin fatty acid esters such as polyglycerin polyricinoleate, glycerin oleate, and diglycerin laurate; sorbitan monofatty acid esters such as sorbitan monolaurate; polyoxyethylene alkyl ethers; polyoxyethylene alkylphenyl ethers; polyoxyethylene alkyl esters; polyoxyethylene sorbitan alkyl esters; polyoxyethylene alkylamines; pentaerythritol fatty acid esters; propylene glycol fatty acid esters; and trimethylolpropane fatty acid esters.

In the second invention, polybutene serves as a predominant tackifying component. However, when polybutene solo or a mixture of polybutene and a small amount of a hydrogenated copolymer as an arbitrary component is employed, only adhesion increases but the easy-drawing property decreases. Thus, the present inventors have found that addition of a specific amount of a tackifier aid maintains transparency and the easy-cutting property of a produced film without impairing adhesion provided by polybutene; prevents self-adhesion between polybutene-bleeding films; and enhances the easy-drawing property. The second invention is based on these findings.

The tackifier aid (E) is incorporated into the composition of the second invention in an amount of 0.01-1 part by weight based on 100 parts by weight of the sum of the polypropylene resin (A) and the hydrogenated copolymer (B), preferably 0.03-0.8 parts by weight, more preferably 0.05-0.5 parts by weight, particularly preferably 0.1-0.2 parts by weight. When the amount is in excess of 1 part by weight, produced film may be sticky.

The resin composition of the second invention essentially comprises the aforementioned polypropylene resin (A), polybutene (C), the tackifier (D), and the tackifier aid (E). The hydrogenated copolymer (B) is a component arbitrarily incorporated into the resin composition in an amount of 5 parts by weight or less based on 100 parts by weight of the sum of the polypropylene resin (A) and the hydrogenated copolymer (B), preferably less than 1 part by weight. The resin composition of the second invention can be produced by blending predetermined components through a method for producing the resin composition of the first invention. The resin composition may further contain another component to a limited amount so long as the effects of the present invention are not impaired.

The thus-obtained resin composition is formed into film by means of a film-former in a manner similar to that of the first invention.

When the stretched film for packaging of the second invention is employed as a wrap film, the stretched film is preferably a biaxially stretched film. Biaxially stretching enhances easy-cutting properties of the produced wrap film. The method for stretching the film as described in relation to the first invention can also be applied to the second invention.

A single layer stretched film for packaging (wrap film) is formed through a method and conditions for molding of the first invention. Specifically, the temperature of the resin during molding is typically 125-270°C. The single layer stretched film for packaging is molded such that the thickness thereof is preferably 5-40 µm, more preferably 5-20 µm in consideration of mechanical strength of the film, ease of wrapping, costs, etc.

The stretched film for packaging of the second invention may be composed of a single layer film comprising the aforementioned polypropylene resin composition in a mode similar to that of the first invention. Alternatively, in order to enhance a gas-barrier property of wrap film, the stretched film may also be provided as a laminated stretched film for packaging in which a layer made of the aforementioned polypropylene resin composition is laminated on one or two surfaces of a chlorine-free resin layer which has a gas-barrier property. Similarly, the gas-barrier layer is preferably formed of a resin impervious to oxygen, such as a chlorine-free aromatic polyamide resin or a saponified ethylene-vinyl acetate copolymer or a resin impervious to water vapor, such as polyproplyene resin. The oxygen-gas-barrier layer and the water-vapor-barrier layer may be laminated.

In a manner similar to that of the first invention, the laminated stretched film for packaging (hereinafter simply referred to as a laminate film) can be produced. The overall thickness of laminate film is preferably 5-40 µm, more preferably 5-20 µm, thickness being similar to that of the aforementioned single layer film. In a laminate film having a layer structure comprising a polypropylene resin composition layer/a polypropylene resin layer/a polypropylene resin composition layer, the outer surface layers formed of a polypropylene resin composition preferably have a thickness of 1 or more µm to 15 or less µm, more preferably 1.5 or more µm to 10 or less µm, while the core polypropylene resin layer preferably has a thickness of 1 or more µm to 15 or less µm, more preferably 1.5 or more µm to 10 or less µm. The adhesion layer, which may be omitted, typically has a thickness of 0.1 or more µm to 0.5 or less µm in accordance with the type of adhesive.

### Examples

The present invention will next be described in more detail by way of Examples, which should not be construed as limiting the invention thereto.

### 1. Transparency (Haze%)

Haze% of each sample was measured in accordance with JIS K7105 by use of a haze-measuring instrument (Σ80; product of Nippon Denshoku Kogyo Co., Ltd.).

Evaluation standards are as follows.
- ⓞ:: very good; less than 1.0
- ○:: good; at least 1.0 and less than 5.0
- △:: opaque; at least 5.0 and less than 20
- X:: very opaque; 20 or higher

### 2. Surface smoothness (Gloss%)

Gloss% of each sample having an incident angle of 60° and a reflection angle of 60° was measured in accordance with JIS K8741 using a gloss-measuring instrument (Σ80; product of Nippon Denshoku Kogyo Co., Ltd.). Evaluation standards are as follows. Samples rated "ⓞ" or "○" are suitable for practical use.
- ⓞ:: 140 or higher
- ○:: at least 100 and less than 140
- △:: at least 60 and less than 100
- X:: less than 60

### 3. Stickiness and adhesion to glass cup

The opening of a glass cup (diameter: 5 cm) was covered with each film to be tested, which had been cut into squares (15 x 15 cm), and pressure was then applied to the film to thereby affix the film to the glass surface. Immediately after the application of pressure, the film affixed to the glass surface was peeled off and adhesion of the film was evaluated. Evaluation standards are as follows. Concerning stickiness and adhesion to a glass cup, samples rated "ⓞ" or "○" are suitable for practical use.

### 3-1. Stickiness

ⓞ: film has adhesive property but can be peeled off
○: film sticks to itself when the film is applied to the glass and is difficult to peel off.
△: adhesive agent is transferred onto hands but adhesive agent transferred to the glass cannot be observed visually.
X: adhesive agent is transferred onto hands and adhesive agent transferred to the glass can be observed visually.

### 3-2. Adhesion to glass cup

- ⓞ:: very good adhesion
- ○:: good adhesion
- △:: slight adhesion
- X:: no adhesion

### 4. Ease-of-cutting with a V-shape serrated cutter

Wrap films were manufactured on an experimental basis. Each of the films was rolled onto a cardboard core roll and the thus-obtained rolled film was put into a box (a film case of New Krewrap; product of Kureha Chemical Industry Co., Ltd.). Thereafter, an end of the rolled wrap film was drawn from the box and then the film was cut using a V-shape serrated cutter, which is attached to the box, and ease-of-cutting of the film was evaluated. Evaluation standards were as follows. Samples rated "ⓞ" or "○" are suitable for practical use.
- ⓞ:: film can be cut with ease
- ○:: film can be cut
- △:: film is difficult to cut
- X:: film stretches and cannot be cut

### 5. Elmendorf tear resistance test

The tear resistance of each sample was measured in accordance with JIS K7128 using an Elmendorf tear resistance-measuring instrument (product of Toyo Seiki Co., Ltd.).

### 6. Oxygen permeability

Oxygen permeability of each test film was measured using an oxygen permeability measuring instrument (OX-TRAN2/20; product of Modern Controls) at 30°C and 60%RH. The measured values are expressed in units of cm³/m²·day·atm.

### 7. Heat resistance test

The heat resistance of each sample film was tested in accordance with the heat resistance testing method for food-wrapping films prescribed by Tokyo Metropolitan local law. The testing method was as follows. Sample films of 3 cm in width and 14 cm in length were prepared. Margins of 2.5 cm in length from both ends of each sample film were fixed and then a load of 10 g was applied to the film. The thus-obtained sample was put into a gear oven and then heated at a predetermined temperature. Tests were performed at intervals of 5°C. If the sample film broke within 1 hour of initiation of heat application, a temperature 5°C lower than the temperature at which the sample film broke is referred to as a "heat resistant temperature."

### 8. Easy-drawing

Wrap films were manufactured on an experimental basis. Each of the films was rolled onto a cardboard core roll and the thus-obtained rolled film was put into a box (a film case of New Krewrap; product of Kureha Chemical Industry Co., Ltd.). Thereafter, the end of the rolled wrap film was drawn from the box and the easy-drawing property of the film was evaluated. Evaluation standards are as follows. Samples rated "ⓞ" or "○" are suitable for practical use.
ⓞ: film can be drawn from the box with ease while the cardboard core roll remains in the box
○: film can be drawn from box if the cardboard core roll is retained in position by exerting slight pressure on the lid of the box
△: It is difficult to draw film from the box even when the cardboard core roll is retained in position by exerting slight pressure on the lid of the box
X: entire rolled film and the cardboard core roll come out of the box

### 9. Measurement of 2.5% Secant Modulus

The 2.5% Secant Modulus of each sample film (20 mm in width and 100 mm in length) was measured by use of a measuring instrument (Tensilon RTM-100; product of Orientech) at a pulling speed of 10 mm/min.

### (Examples 1-5 and Comparative Examples 1-4)

Resin compositions containing the resins shown in Table 1 were prepared using the following materials: a random copolymer of propylene and ethylene (NOBLEN FL851; product of Sumitomo Chemical Co., Ltd.; MFR = 6.0 g/10 min, melting point = 140°C) serving as the polypropylene resin (A); a SEBS block copolymer (ELASTOMER AR840C; product of Aron Kasei Co., Ltd.) serving as the hydrogenated copolymer (B), or an ethylene·α-olefin copolymer as a substitute for the hydrogenated copolymer (B) in Comparative Examples (TAFMER P0180, product of Mitsui Chemicals, Inc.); Nisseki polybutene HV-300 (kinematic viscosity = 32,000 cSt, number-average molecular weight = 1,350) serving as the polybutene (C); an alicyclic saturated hydrocarbon resin of formula (1) (ARKON P-140; product of Arakawa Chemical Industries, Ltd.) serving as a tackifier (D); and a glycerol fatty acid ester (RIKEMAL AO-372; product of Riken Vitamin Co., Ltd.) serving as a tackifier aid (E). Each of the resultant resin compositions was molded through extrusion.

Specifically, the above-described additives and a portion of polypropylene resin (A) were blended and then extruded at 200°C to obtain master pellets using a double-screw extruder . Thereafter, the thus-obtained master pellets and the remaining portion of the polypropylene resin (A) were blended so as to obtain the resin composition shown in Table 1. The resultant resin composition was molded into a film through extrusion at 200°C by use of a single-screw extruder (dry stretching process BOY; product of Yamaguchi Seisakusho Co., Ltd.). Then the thus-obtained film was stretched at 138°C into a film having five times the length and five times the width of the original film. The temperature of 138°C is slightly lower than the melting point of a polypropylene resin (random polypropylene NOBLEN FL851; melting point = 140°C). The thickness of the packaging stretched film (may be referred to as "wrap film") thus obtained is 10 µm.

Concerning each of the wrap films, adhesion to a glass cup was evaluated and "haze" (transparency) and "gloss" (surface smoothness) were measured. The results are shown in Table 2.

### (Referential Examples)

For reference purposes, commercial wrap films made from various resin materials were subjected to the above-described evaluation and measurements. The results are shown in Table 2. The commercial wrap films used were as follows. "New Krewrap" (product of Kureha Chemical Industry Co., Ltd.) made from vinylidene chloride copolymer; thickness = 10 µm, "Commercial film A" made from low-density polyethylene, thickness = 11 µm; "Commercial film B" made from poly-4-methylpenetene, thickness = 10 µm; "Commercial film C," laminated film of polypropylene/nylon/polypropylene, thickness = 9 µm.

**Table 1**

| | Resin Composition (parts by weight) | | | | | |
|---|---|---|---|---|---|---|
| | Propylene resin (A) | Block Copolymer (B) | | Polybutene (C) | Tackifier (D) | Tackifier aid (E) |
| | | SEBS | E-α-ol.^{*1} | | | |
| Example 1 | 90 | 10 | 0 | 5 | 5 | 0 |
| Example 2 | 90 | 10 | 0 | 5 | 5 | 0.1 |
| Example 3 | 90 | 10 | 0 | 10 | 5 | 0.1 |
| Example 4 | 90 | 10 | 0 | 10 | 5 | 0 |
| Example 5 | 80 | 20 | 0 | 5 | 5 | 0 |
| Comp. Ex. 1 | 90 | 10 | 0 | 5 | 0 | 0.1 |
| Comp. Ex. 2 | 90 | 10 | 0 | 10 | 0 | 0 |
| Comp. Ex. 3 | 90 | 10 | 0 | 5 | 0 | 0 |
| Comp. Ex. 4 | 90 | 0 | 10 | 5 | 0 | 0 |
| Ref. Ex. 1 | "New Krewrep" produced by Kureha Chemical Industry Co., Ltd.: made from vinylidene chloride copolymer, 10 µm. | | | | | |
| Ref. Ex. 2 | Commercial product A:made from low-density polyethylene, 11 µm. | | | | | |
| Ref. Ex. 3 | Commercial product B:made from poly4-methylpentene-1, 10 µm. | | | | | |
| Ref. Ex. 4 | Commercial product C:polypropylene/nylon/polypropylene laminate film, 9 µm. | | | | | |

| | | | | | | |
|---|---|---|---|---|---|---|
| E-α-ol.^{*1}:"Tufmer P0180", Ethylene-α-olefin copolymer | | | | | | |

**Table 2**

| | Transparency | | Gloss | | Stickiness | Adhesion to glass cups |
|---|---|---|---|---|---|---|
| | Evaluation | HAZE(%) | Evaluation | GLOSS(%)^{*1} | | |
| Example 1 | ⓞ | 0.56 | ⓞ | 148/147 | ⓞ | ⓞ |
| Example 2 | ⓞ | 0.60 | ⓞ | 150/150 | ⓞ | ⓞ |
| Example 3 | ⓞ | 0.73 | ⓞ | 144/144 | ⓞ | ⓞ |
| Example 4 | ⓞ | 0.38 | ⓞ | 149/147 | ⓞ | ⓞ |
| Example 5 | ⓞ | 0.98 | ⓞ | 140/140 | ⓞ | ⓞ |
| Comp. Ex. 1 | ⓞ | 0.66 | ⓞ | 145/142 | ⓞ | ○ |
| Comp. Ex. 2 | ○ | 1.19 | ○ | 127/121 | ○ | ⓞ |
| Comp. Ex. 3 | ⓞ | 0.95 | ○ | 135/129 | ⓞ | ○ |
| Comp. Ex. 4 | ○ | 3.5 | - | - | ⓞ | △ |
| Ref. Ex. 1 | ⓞ | 0.72 | ⓞ | 151/154 | ⓞ | ⓞ |
| Ref. Ex. 2 | ○ | 1.25 | ⓞ | 143/142 | ⓞ | ⓞ |
| Ref. Ex. 3 | ⓞ | 0.43 | ⓞ | 143/138 | ○ | ⓞ |
| Ref. Ex. 4 | ○ | 1.12 | ○ | 135/133 | △ | ⓞ |

| | | | | | | |
|---|---|---|---|---|---|---|
| GLOSS(%)*1: indicated as MD/TD. MD refers to the machine direction during production of film. TD is a direction normal to MD. | | | | | | |

As shown in Table 2, the films in Examples of the present invention exhibit excellent "haze" and "gloss" values. The addition of alicyclic saturated hydrocarbon resin confers excellent optical properties on a film. Alicyclic saturated hydrocarbon resin serving as a tackifier (D) improves the transparency and gloss of a wrap film. This is because the alicyclic saturated hydrocarbon resin smoothens the film surface to thereby reduce irregular reflection.

Moreover, as shown in Table 2, films of Examples of the present invention exhibit excellent adhesion to a glass cup and exhibit less stickiness. Conventionally, in order to obtain adhesion to a glass cup, the incorporated amount of polybutene is increased or the incorporated amount of the SEBS block copolymer, which acts as a bleeding promoter of polybutene, is increased. Although such a composition makes the adhesion of a film to a glass cup possible, the composition also renders the film excessively sticky. Such film is not suitable for practical use. On the contrary, through the addition of the alicyclic saturated hydrocarbon resin, sufficient adhesion to a glass cup can be obtained while excessive stickiness and excessive adhesion to itself when the film is rolled can be avoided.

The adhesion promoting effect of alicyclic saturated hydrocarbon resin on wrap film is strongly related to the above-described surface smoothing effect on wrap film. That is, if the surface of the wrap film is smooth, the contact area of the adhered substance increases, which results in an apparent increase in adhesive strength. Therefore, increasing the contact area gives rise to the desired adhesion property even when the adhesive strength is low.

### (Examples 6-10 and Comparative Examples 5-8)

Laminated films were molded through extrusion using a triple-layered circular die and an extruder (dry stretching process BOY; product of Yamaguchi Seisakusho Co., Ltd.). The above-described polypropylene resin (A) in Example 1 was employed for inner layers of the laminated films. The compositions described in Examples 1-5 and Comparative Examples 1-4 were employed for outer layers attached to both sides of the inner layers of Examples 6-10 and Comparative Examples 5-8 respectively. Each layer was extruded at 200°C. Then each of the thus-obtained laminated films was stretched at 138°C into a film having five times the length and five times the width of the original film. The thickness of the wrap film thus obtained was 10 µm and the thickness of each layer constituting the laminated film was 2.5/5/2.5 µm.

The thus-obtained films and above-described reference films were evaluated for adhesion to a glass cup and ease-of-cutting using a V-shape serrated cutter. Those films were also subjected to Elmendorf tear resistance testing (quantitative evaluation of ease-of-cutting) and heat resistance testing. The results are shown in Table 3.

**Table 3**

| | Constitution | Adhesion to glass cup | Easy cutting | EL Strength^{*1} gf | Heat resistance °C |
|---|---|---|---|---|---|
| Example 1 | Single layer | ⓞ | ⓞ | 4/4 | 150 |
| Example 6 | The surface layer is of the same material as in EX. 1 | ⓞ | ⓞ | 4/4 | 150 |
| Example 7 | The surface layer is of the same material as in EX. 2 | ⓞ | ⓞ | 4/4 | 150 |
| Example 8 | The surface layer is of the same material as in Ex. 3 | ⓞ | ⓞ | 3/4 | 150 |
| Example 9 | The surface layer is of the same material as in Ex. 4 | ⓞ | ⓞ | 4/3 | 150 |
| Example 10 | The surface layer is of the same material as in Ex. 5 | ⓞ | ⓞ | 4/4 | 150 |
| Example 11 | The inner layer contains SEBS | ⓞ | ⓞ | 3/4 | 150 |
| Comp. Ex. 5 | The surface layer is of the same material as in Comp. Ex. 1 | ○ | ⓞ | 4/4 | 140 |
| Comp. Ex. 6 | The surface layer is of the same material as in Comp. Ex. 2 | ⓞ | ⓞ | 4/4 | 140 |
| Comp. Ex. 7 | The surface layer is of the same material as in Comp. Ex. 3 | ○ | ⓞ | 4/4 | 140 |
| Comp. Ex. 8 | The surface layer is of the same material as in Comp. Ex. 4 | △ | ⓞ | 4/4 | 140 |
| Ref. Ex. 1 | Vinylidene-chloride polymer | ⓞ | ⓞ | 6/5 | 140 |
| Ref. Ex. 2 | Low-density polyethylene | ⓞ | X | 42/106 | 110 |
| Ref. Ex. 3 | Poly4-methylpentene-1 | ⓞ | X | 3/24 | 180 |
| Ref. Ex. 4 | Polypropylene/nylon/polypropylene laminate film | ⓞ | △ | 71/31 | 180 |

| | | | | | |
|---|---|---|---|---|---|
| EL Strength^{*1}: Elmendorf tear resistance, MD/TD | | | | | |

### Example 11

The procedure used in Example 10 was repeated, except that the composition comprising 90 parts by weight of the polypropylene resin (A) in Example 1 and 10 parts by weight of the SEBS in Example 1 was employed for the inner layers. The results are shown in Table 3.

As shown in Table 3 sample film having a low Elmendorf tear resistance TD value (longitudinal strength) exhibits the property of easy-cutting. It was also confirmed that the TD value of Elmendorf tear resistance serves as a good index of the strength of a wrap film against tearing in the TD direction, which is initiated by the film being pierced. In consideration of the Elmendorf tear resistance TD value and its relationship to ease-of-cutting, the TD value is preferably not greater than 10 gf, more preferably not greater than 8 gf, and yet more preferably not greater than 5 gf.

As shown in Table 3, it was also confirmed that the addition of hydrogenated copolymer (B) and tackifier and tackifier aid to polypropylene resin for the purpose of adhesion improvement does not affect the heat resistance of the polypropylene resin when compared to a single layer film. Moreover, the heat resistant temperature of the films is nearly equal to the melting point of the matrix resin. The heat resistant temperatures of the films of the Examples of the present invention are higher than those of commercial polyethylene wrap films, and are comparable to those of the polyvinylidene chloride films. The heat resistant temperature of wrap films in which inner layers of polypropylene resin are sandwiched between layers of the adhesive polypropylene resin composition are the same as the heat resistant temperature of single-layered wrap films of polypropylene resin.

### (Examples 12-17 and Comparative Examples 9-16)

The same polypropylene resin (A) as employed in Example 1 was formed into an inner layer, which was sandwiched with a layer made of the same polypropylene resin composition as shown in Table 4. The prepared laminated film was extruded in a manner similar to that employed in Example 6. The thus-obtained films and reference samples were evaluated for adhesion to a glass cup, easy drawing, stickiness, transparency, gloss, ease-of-cutting, and heat resistance. The results are shown in Tables 5 and 6.

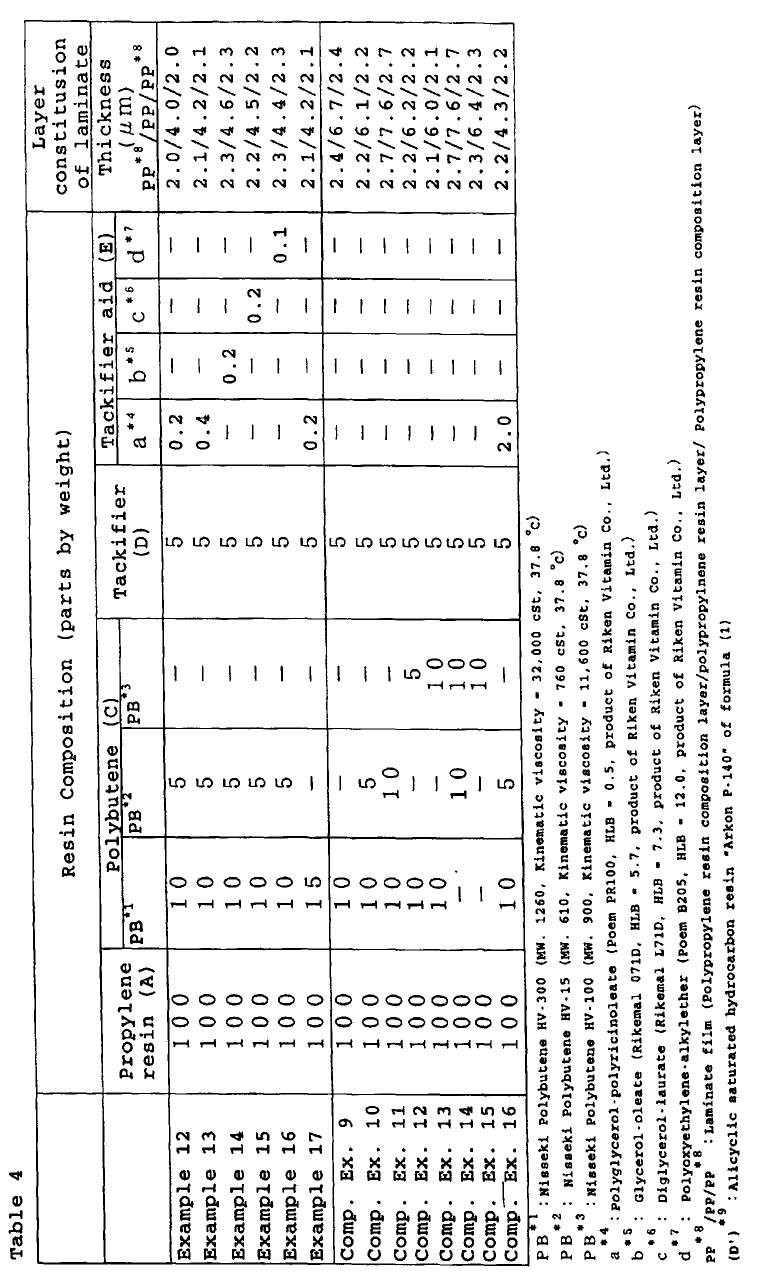

**Table 5**

| | Adhesion to glass cups | Drawability | Stickiness |
|---|---|---|---|
| Example 12 | ⓞ | ⓞ | ⓞ |
| Example 13 | ⓞ | ⓞ | ⓞ |
| Example 14 | ⓞ | ⓞ | ⓞ |
| Example 15 | ⓞ | ⓞ | ⓞ |
| Example 16 | ⓞ | ⓞ | ⓞ |
| Example 17 | ⓞ | ⓞ | ⓞ |
| Comp. Ex. 9 | △ | ○ | ○ |
| Comp. Ex. 10 | ⓞ | ○ | ○ |
| Comp. Ex. 11 | ⓞ | X | △ |
| Comp. Ex. 12 | ⓞ | △ | ○ |
| Comp. Ex. 13 | ⓞ | X | △ |
| Comp. Ex. 14 | △ | △ | ○ |
| Comp. Ex. 15 | △ | ○ | ○ |
| Comp. Ex. 16 | ⓞ | ⓞ | △ |
| Ref. Ex.^{*1} | ⓞ | ⓞ | ⓞ |

| | | | |
|---|---|---|---|
| Reference Example^{*1}:"Krewrap" produced by Kureha Chemical Industry Co., Ltd. made of vinylidene chloride | | | |

**Table 6**

| | Transparency | | Gloss | | Easy cutting property | | Heat resistance |
|---|---|---|---|---|---|---|---|
| | haze% | Evaluation | Gloss% | Evaluation | EL^{*1} strength | Evaluation | °C |
| Example 12 | 0.39 | ⓞ | 145/145 | ⓞ | 4/3 | ⓞ | 150 |
| Example 13 | 0.67 | ⓞ | 142/142 | ⓞ | 4/3 | ⓞ | 150 |
| Example 14 | 0.38 | ⓞ | 144/142 | ⓞ | 3/4 | ⓞ | 150 |
| Example 15 | 0.47 | ⓞ | 147/148 | ⓞ | 3/4 | ⓞ | 150 |
| Example 16 | 0.38 | ⓞ | 147/144 | ⓞ | 4/4 | ⓞ | 150 |
| Example 17 | 0.62 | ⓞ | 147/148 | ⓞ | 4/3 | ⓞ | 150 |
| Comp. Ex. 9 | 0.78 | ⓞ | 145/144 | ⓞ | 4/4 | ⓞ | 150 |
| Comp. Ex. 10 | 0.16 | ⓞ | 149/145 | ⓞ | 3/3 | ⓞ | 150 |
| Comp. Ex. 11 | 0.69 | ⓞ | 144/142 | ⓞ | 4/3 | ⓞ | 150 |
| Comp. Ex. 12 | 0.65 | ⓞ | 136/138 | ○ | 3/4 | ⓞ | 150 |
| Comp. Ex. 13 | 0.71 | ⓞ | 143/141 | ⓞ | 4/4 | ⓞ | 150 |
| Comp. Ex. 14 | 0.65 | ⓞ | 141/144 | ⓞ | 4/4 | ⓞ | 150 |
| Comp. Ex. 15 | 0.27 | ⓞ | 142/136 | ○ | 4/3 | ⓞ | 150 |
| Comp. Ex. 16 | 0.56 | ⓞ | 145/143 | ⓞ | 3/3 | ⓞ | 150 |
| Ref. Ex.^{*1} | 0.72 | ⓞ | 151/154 | ⓞ | 6/5 | ⓞ | 140 |

| | | | | | | | |
|---|---|---|---|---|---|---|---|
| EL Strength^{*1}: Elmendorf tear resistance, MD/TD (Unit: gf) | | | | | | | |

### Industrial Applicability

The chlorine-free wrap film obtained from the polypropylene resin composition of the present invention has heat resistance equivalent to that of a wrap film made of only polypropylene resin. In addition, the wrap film of the present invention is non-sticky but is endowed with favorable adhesion. The film is stretched to thereby exhibiting easy-cutting properties and has excellent transparency. Particularly, the film having an Elmendorf tear resistance of 10 gf or less exhibits remarkably favorable easy-cutting properties. Thus, a wrap film having an "easy-drawing property," which is an important property when a wrap film is unrolled from a cardboard core roll and built in a film box, can be produced.

## Claims

1. A polypropylene resin composition which comprises 60-99 parts by weight of a polypropylene resin (A) having a crystalline melting point of 130°C or higher; 1-40 parts by weight of a hydrogenated copolymer (B) of an aromatic vinyl compound and a conjugated diolefin; 0.1-20 parts by weight of polybutene (C) having a kinematic viscosity of 10-2,000,000 cSt as measured at 37.8°C in accordance with JIS K2283; 0.1-20 parts by weight of a tackifier (D); and 0-5 parts by weight of a tackifier aid (E), the amounts of components (C), (D), and (E) being on the basis of 100 parts by weight of the sum of components (A) and (B).

2. A polypropylene resin composition according to claim 1, wherein the hydrogenated copolymer (B) of the aromatic vinyl compound and the conjugated diolefin is a styrene-ethylene-butylene-styrene (SEBS) block copolymer.

3. A polypropylene resin composition according to claim 1 or 2, wherein the tackifier (D) is an alicyclic saturated hydrocarbon resin.

4. A stretched film for packaging which is made of a polypropylene resin composition as recited in any one of claims 1 through 3.

5. A stretched film for packaging according to claim 4, which is biaxially stretched.

6. A laminated stretched film for packaging comprising at least one outer surface layer formed of a stretched film for packaging as recited in claim 4.

7. A laminated stretched film for packaging according to claim 6, wherein an inner layer is formed of a layer made of a polypropylene resin or resin composition comprising 70-100 parts by weight of a polypropylene resin (A) and 0-30 parts by weight of a hydrogenated copolymer (B) of an aromatic vinyl compound and a conjugated diolefin.

8. A stretched film for packaging according to any one of claims 4 through 7, which has an Elmendorf tear resistance in the TD direction of 10 gf or less.

9. A stretched film for packaging according to any one of claims 4 through 8, wherein the hydrogenated copolymer (B) of the aromatic vinyl compound and the conjugated diolefin is a styrene-ethylene-butylene-styrene (SEBS) block copolymer.

10. A polypropylene resin composition which comprises 95-100 parts by weight of a polypropylene resin (A) having a crystalline melting point of 130°C or higher; 0-5 parts by weight of a hydrogenated copolymer (B) of an aromatic vinyl compound and a conjugated diolefin; 5-20 parts by weight of polybutene (C) having a kinematic viscosity of 10-2,000,000 cSt as measured at 37.8°C in accordance with JIS K2283; 0.1-20 parts by weight of a tackifier (D); and 0.01-1 part by weight of a tackifier aid (E), the amounts of components (C), (D), and (E) being on the basis of 100 parts by weight of the sum of components (A) and (B).

11. A polypropylene resin composition according to claim 10, wherein the polypropylene resin (A) is contained in an amount higher than 99 parts by weight up to 100 parts by weight, and the hydrogenated copolymer (B) of an aromatic vinyl compound and a conjugated diolefin is contained in an amount greater than 0 parts by weight but less than 1 part by weight (provided that the sum of the components (A) and (B) makes 100 parts by weight).

12. A polypropylene resin composition according to claim 10 or 11, wherein the polybutene (C) comprises 0.1-10 parts by weight of a low-molecular-weight polybutene having a kinematic viscosity of 10-20,000 cSt as measured at 37.8°C and the balance being a high-molecular-weight polybutene having a kinematic viscosity of 20,000-2,000,000 cSt, the total amount of the two polybutenes being 5-20 parts by weight.

13. A polypropylene resin composition according to claim 10 or 11, wherein the tackifier (D) is at least one species selected from petroleum resins.

14. A polypropylene resin composition according to claim 10 or 11, wherein the tackifier aid (E) is at least one species selected from surfactants.

15. A stretched film for packaging made of a polypropylene resin composition as recited any one of claims 10 through 14.

16. A stretched film for packaging according to claim 15, which is biaxially stretched.

17. A laminated stretched film for packaging comprising at least one outer surface layer formed of a stretched film for packaging as recited in claim 16.
